# EUROPÄISCHE PATENTSCHRIFT

(11) **EP 0 721 869 B1**
(45) Veröffentlichungstag und Bekanntmachung des Hinweises auf die Patenterteilung: **13.05.1998**
(21) Anmeldenummer: 95118349.0
(22) Anmeldetag: 22.11.1995
(51) Int. Cl.: B60R 25/02

(54) **Verriegelungsvorrichtung für Kraftfahrzeuge**
Locking device for vehicles
Dispositif de verrouillage pour véhicules

(30) Priorität: 12.01.1995 DE 19500682
(43) Veröffentlichungstag der Anmeldung: 17.07.1996
(73) Patentinhaber: VALEO GmbH & Co Schliesssysteme KG, 42579 Heiligenhaus (DE)
(72) Erfinder: Lieb, Kurt, D-63500 Seligenstadt (DE); Engelmann, Joachim, D-49661 Cloppenburg (DE); Strütt, Achim, D-64560 Riedstadt (DE); Richter, Martin, D-40233 Düsseldorf (DE); Holz, Klaus, D-64832 Babenhausen (DE)
(74) Vertreter: Podszus, Burghart, Dipl.-Phys., Dipl.-Wirtsch.-Ing.

(56) Entgegenhaltungen:
- EP-A- 0 499 001
- EP-A- 0 666 205

## Beschreibung

Die Erfindung betrifft eine Verriegelungsvorrichtung in einem Kraftfahrzeug gemäß den Merkmalen des Oberbegriffs des Anspruchs 1. Eine derartige Verriegelungsvorrichtung ist aus DE-C-3 739 172 bekannt.

Es ist seit langem bekannt, Kraftfahrzeuge gegen Diebstahl dadurch zu sichern, daß ein als Sperrelement verwendeter Bolzen senkrecht in eine Ausnehmung der Lenkspindel der Lenksäule eingreift und diese blockiert. Die Betätigung des Sperrbolzens erfolgt dabei üblicherweise rein mechanisch über ein mit dem Zündschloß verbundenes Gestänge, so daß bei entsprechender Drehung des Zündschlüssels sich ebenfalls der Sperrbolzen in die Ausnehmung der Lenkspindel hinein- oder herausbewegt.

Nachteilig ist bei derartigen bekannten Verriegelungsvorrichtungen vor allem, daß die Verriegelungsvorrichtung und das Zündschloß in der Regel eine Einheit bilden und daher relativ voluminös und sperrig ausgebildet sind und somit den Knieraum des Fahrers entsprechend begrenzen. Außerdem erfordert die Bewegung des Sperrbolzens senkrecht zur Lenkspindelachse ebenfalls einen entsprechenden Raumbedarf senkrecht zur Lenksäule und damit in den Knieraum des Fahrers.

Aus der DE 37 39 172 C1 ist ein Schließsystem für Kraftfahrzeuge bekannt, bei dem das Zündschloß und die Verriegelungsvorrichtung räumlich getrennt voneinander angeordnet werden können, weil der Sperrbolzen nicht über ein Gestänge mit dem Schließzylinder verbunden ist, sondern mit diesem elektrisch gekoppelt ist. Bei Drehung des Zündschlüssels betätigt dabei ein in der Verriegelungsvorrichtung angeordneter Elektromotor eine Spindel, die ihrerseits eine Zahnstange verschiebt, an welcher der Sperrbolzen befestigt ist. Aus Sicherheitsgründen sind allerdings Schließzylinder und Verriegelungsvorrichtung zusätzlich noch über einen Bowdenzug miteinander verbunden.

Nachteilig ist auch bei dieser Verriegelungsvorrichtung, daß die Bewegung des Sperrbolzens senkrecht zur Lenkspindelachse erfolgt und daher ebenfalls ein entsprechend großer Raumbedarf senkrecht zur Lenksäule erforderlich ist.

Bei den vorstehend beschriebenen Verriegelungsvorrichtungen hat es sich überdies als nachteilig erwiesen, daß die Ausnehmungen, in die die Sperrbolzen eingreifen, sich in einer auf der Lenkspindel aufgeschrumpften Hülse befinden. Diese Hülse soll die Funktion einer Rutschkupplung übernehmen, falls in der Blockierstellung der Lenkspindel versucht wird, das Lenkrad mit großer Gewalt zu drehen, um so zu verhindern, daß bei gewaltsamen Drehen des Lenkrades der Sperrbolzen oder sonstige mit dem Sperrbolzen verbundene Teile beschädigt werden. Allerdings hat sich gezeigt, daß bei häufigen gewaltsamen Drehversuchen des Lenkrades durch Materialabrieb der Rutschkupplungshülse auch eine Lenkung des Fahrzeuges im blockierten Zustand der Lenkspindel möglich ist. Eine Diebstahlsicherung ist in diesen Fällen dann nicht mehr gewährleistet.

Der Erfindung liegt die Aufgabe zugrunde, eine Verriegelungsvorrichtung anzugeben, die einen kompakten Aufbau aufweist und platzsparend an der Lenkspindel anordbar ist, und bei der die Rutschkupplung derart ausgebildet ist, daß auch ein häufiges gewaltsames Drehen des Lenkrades zu keiner Verminderung des Diebstahlschutzes führt. Außerdem soll die Verriegelungsvorrichtung vorzugsweise räumlich getrennt von dem Zündschloß anordbar sein.

Diese Aufgabe wird erfindungsgemäß durch die Merkmale des kennzeichnenden Teils des Anspruchs 1 gelöst. Weitere besonders vorteilhafte Ausgestaltungen der Erfindung offenbaren die Unteransprüche.

Die Erfindung beruht im wesentlichen auf dem Gedanken, daß einerseits als Sperrelement nicht starre Sperrbolzen verwendet werden, die senkrecht in eine an der jeweiligen Lenkspindel angeordnete Ausnehmung eingreifen, sondern federnde Sperrsegmente, die an einer verschiebbaren die Lenkspindel umschließenden Hülse (Sperrsegmenthülse) befestigt sind, welche mittels eines Elektromotors parallel zur Längsachse der Lenkspindel verschoben wird, so daß die Sperrsegmente in entsprechende fest mit der Lenkspindel verbundene Ausnehmungen eingreifen bzw. aus diesen herausgezogen werden. Die Ausnehmungen der Lenkspindel werden dabei vorzugsweise durch die Zwischenräume eines mit stegförmigen Teilen unterteilten Ringes gebildet. Bei gewaltsamen Drehen des Lenkrades und damit auch der Lenkspindel verrutscht daher nicht mehr die Lenkspindel gegenüber einer Hülse, sondern die federnden Sperrsegmente werden durch die stegförmigen Teile zurückgedrückt und gleiten in die jeweils nächste durch zwei entsprechende stegförmige Teile begrenzte Ausnehmung.

Um eine sichere Blockierung der Lenkspindel zu erreichen, hat es sich als vorteilhaft erwiesen, mindestens zwei einander gegenüberliegende federnde Sperrsegmente an der Sperrsegmenthülse zu befestigen, wobei es sich bei den Sperrsegmenten vorzugsweise um gebogene Blattfedern handelt und die stegförmigen Teile vorzugsweise jeweils etwa die Form des Zahnes eines Zahnrades aufweisen.

Um auf einfache Weise eine Verschiebung der Sperrsegmenthülse zu erreichen, ist bei einem bevorzugten Ausführungsbeispiel vorgesehen, daß die Sperrsegmenthülse über einen Steuernocken mit einer Nockenhülse verbunden ist, so daß eine Drehung der Nockenhülse durch den Elektromotor eine Verschiebung der Sperrsegmenthülse bewirkt.

Um sicherzustellen, daß bei der Entriegelungsstellung der Verriegelungsvorrichtung keine Blockierung der Lenkspindel durch die Sperrsegmente eintreten kann, ist bei einem weiteren Ausführungsbeispiel vorzugsweise als zusätzliche Sicherheit ein Elektromagnet vorgesehen, der einen Sperrhebel aufweist, welcher in eine nutenförmige Ausnehmung der Nockenhülse eingreift, sobald sich der Zündschlüssel in der Stellung "Fahrt" befindet und die Sperrsegmenthülse sich soweit verschoben hat, daß die Sperrsegmente nicht mehr in die Ausnehmungen der Lenkspindel eingreifen. Erst wenn der Zündschalter aus dem Schließzylinder gezogen wird, wird der Sperrmagnet wieder bestromt und das Sperrelement gibt die Nockenhülse frei, die sich dann so lange dreht, bis die Sperrsegmente in den Ausnehmungen der Lenkspindel einrasten. Ein zusätzlicher Bowdenzug, wie im Falle der eingangs erwähnten DE 37 39 172 C1 ist daher bei der erfindungsgemäßen Verriegelungsvorrichtung entbehrlich.

Weitere Einzelheiten und Vorteile der Erfindung ergeben sich aus dem folgenden anhand von Figuren erläuterten Ausführungsbeispiel. Es zeigen:
- Fig.1: eine perspektivische Ansicht einer erfindungsgemäßen Verriegelungsvorrichtung in Verriegelungsstellung;
- Fig.2: eine Draufsicht auf die in Fig.1 dargestellte Verriegelungsvorrichtung und
- Fig.3: die in Fig.1 dargestellte Verriegelungsvorrichtung mit Sperrsegmenten, aber ohne Sperrsegmenthülse.

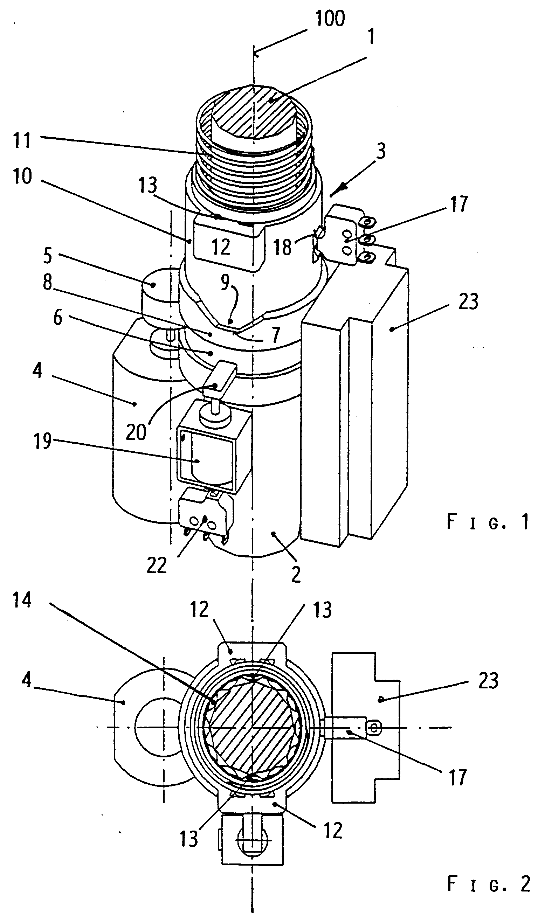

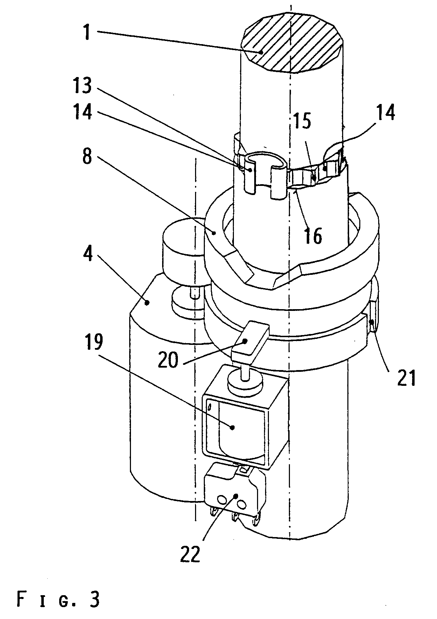

In Fig. 1 ist mit 1 die Lenkspindel einer Lenksäule, mit 2 das mit der Karosserie des entsprechenden Kraftfahrzeuges verbundene Mantelrohr der Lenksäule und mit 3 die erfindungsgemäße Verriegelungsvorrichtung bezeichnet. Die Verriegelungsvorrichtung 3 enthält einen z.B. an dem Mantelrohr 2 befestigten Elektromotor 4, welcher über ein Ritzel 5 eine das Mantelrohr 2 umschließende Nockenhülse 6 antreibt. In eine Ausnehmung 7 des entsprechenden Steuernockens 8 der Nockenhülse 6 greift der Nocken 9 einer in Richtung der Lenkspindelachse 100 verschiebbaren Hülse (Sperrsegmenthülse) 10 ein und wird in dieser Lage durch eine Druckfeder 11 gehalten. Am oberen Ende der Sperrsegmenthülse 10 befinden sich zwei in jeweils einem Gehäuse 12 gelagerte federnde Sperrsegmente 13, die jeweils die Form einer gebogenen Blattfeder aufweisen (vgl. auch Fig.2 und 3).

Wie aus Fig.2 ersichtlich ist, greifen die Sperrsegmente 13 in Ausnehmungen 14 der Lenkspindel 1 ein. Die Ausnehmungen 14 der Lenkspindel 1 werden dabei durch die Zwischenräume eines mit stegförmigen Teilen 15 versehenen Ringes 16 gebildet (Fig.3), wobei die stegförmige Teile etwa die Form des Zahnes eines Zahnrades besitzen.

Die Verriegelungsvorrichtung 3 enthält ferner einen Schalter 17, der durch einen an der Sperrsegmenthülse 10 angeordneten Schaltnocken 18 betätigbar ist, sobald sich die Sperrsegmenthülse 10 verschiebt.

Mit dem Bezugszeichen 19 ist ein Elektromagnet bezeichnet, welcher mit einem Sperrhebel 20 derart verbunden ist, daß in der entriegelten Stellung der Verriegelungsvorrichtung 3 der Sperrhebel 20 in eine nutenförmige Ausnehmung 21 der Nockenhülse 6 eingreift. Die Stellung des Elektromagneten 19 wird dabei mittels eines Schalters 22 überwacht.

Wie den Fig. 1 und 2 zu entnehmen ist, ist mit der Verriegelungsvorrichtung 3 eine Elektronikeinheit 23 verbunden, die für die Auswertung der durch die Schalter 17 und 22 erzeugten Signale sowie für die Stromversorgung des Elektromagneten 19 sorgt. Außerdem ist die Elektronikeinheit 23 mit dem z.B. am Armaturenbrett angeordneten Zündschloß (aus Übersichtlichkeitsgründen nicht dargestellt) verbunden.

Im folgenden wird näher auf die Funktionsweise der Verriegelungsvorrichtung 3 eingegangen. Dabei soll sich die Verriegelungsvorrichtung zunächst in der in den Figuren dargestellten Verriegelungsstellung befinden. Nachdem der Zündschlüssel in das Zündschloß gesteckt wurde, wird von dem Zündschloß ein entsprechender Impuls erzeugt, der über eine elektrische Leitung der Elektronikeinheit 23 zugeführt wird. Die Elektronikeinheit 23 sorgt für eine Bestromung des Motors 4, so daß die Nockenhülse 6 um einen Winkel von etwa 90° gedreht wird und sich über den Steuernocken 8 die Sperrsegmenthülse 10 gegen den Druck der Feder 11 entsprechend verschiebt. In dieser Stellung der Sperrsegmenthülse 10 greifen die Sperrsegmente 13 nicht mehr in die Ausnehmungen 14 des Ringes 16 ein.

Die Abschaltung des Elektromotors 4 kann beispielsweise dadurch eingeleitet werden, daß der Schaltnocken 18 nach einer vorgegebenen Weglänge der Sperrsegmenthülse 10 den Schalter 17 freigibt oder herunterdrückt.

Sobald die Nockenhülse 6 ihre Endstellung erreicht hat, befindet sich der Sperrhebel 20 des Elektromagneten 19 genau über der nutenförmigen Ausnehmung 21 (Fig.3). Die Elektronikeinheit 23 sorgt für eine entsprechende Bestromung des Magneten 19, so daß der Sperrhebel 20 in die Ausnehmung 21 gezogen wird und ein Verdrehen der Nockenhülse 6 -etwa durch unbeabsichtigte Bestromung des Elektromotors 4- nicht möglich ist. Sobald der Sperrhebel 20 eine vorgegebene Stellung innerhalb der nutenförmigen Ausnehmung 21 erreicht hat, wird der Schalter 22 betätigt und schaltet die Verriegelungsvorrichtung 3 stromlos, wobei der Sperrhebel 20 in seiner Stellung verbleibt.

Um die Verriegelungsvorrichtung 3 wieder in ihre Verriegelungsstellung zu bringen, wird beim Abziehen des Zündschlüssels aus dem Schließzylinder ein Impuls erzeugt, der die Elektronik 23 veranlaßt, die Verriegelungsvorrichtung 3 über eine den Schalter 22 überbrückende Leitung zu bestromen. Der Elektromagnet 19 drückt nun den Sperrhebel 20 nach oben aus der nutenförmigen Ausnehmung 21. Gleichzeitig dreht der Motor 4 die Nockenhülse 6 um 90° weiter. Da der Steuernocken 8 auf der dem Betrachter abgewandten Seite der Fig.1 ebenfalls eine Ausnehmung 7 und die Sperrsegmenthülse 10 einen entsprechenden Nocken 9 aufweisen, gleitet die Sperrsegmenthülse 10 aufgrund des Druckes der Feder 11 zurück in die Ausgangslage und die Sperrsegmente 13 rasten in die Ausnehmungen 14 ein.

Sollte beim Zurückgleiten der Sperrsegmenthülse 10 die Sperrsegmente 13 jeweils auf ein stegförmiges Teil 15 treffen, so bleibt die Sperrsegmenthülse 10 zunächst in dieser Position. Sobald das Lenkrad und damit die Lenkspindel etwas verdreht werden, rutschen die Sperrsegmente 13 in die Ausnehmungen 14 und die Sperrsegmenthülse 10 wird gegen die Nockenhülse 6 gedrückt.

Versucht nun ein Unbefugter mit großer Gewalt das Lenkrad und damit auch die Lenkspindel 1 zu drehen, so drücken die Stegförmigen Teile 15 die federnden Sperrsegmente 13 zunächst nach unten und die Sperrsegmente 13 gleiten anschließend in die jeweils benachbarte Ausnehmung 14. Beim weiteren gewaltsamen Drehen des Lenkrades wiederholt sich dieser Vorgang, ohne daß eine wesentliche Abnutzung der stegförmigen Teile 15 oder der Sperrsegmente 13 zu befürchten ist.

Die Erfindung ist selbstverständlich nicht auf das vorstehend beschriebene Ausführungsbeispiel beschränkt. So ist es beispielsweise möglich, statt einem oder zwei Sperrsegmenten auch noch weitere (z.B. drei oder vier) Segmente zu verwenden, so daß ein gewaltsames Verdrehen des Lenkrades immer schwerer wird.

Anstatt die Steuernocken 8 spiegelsymmetrisch aufzubauen und dadurch nur eine Motordrehrichtung zuzulassen, kann auch lediglich nur eine Ausnehmung 7 und ein Nocken 9 vorgesehen werden. Der Elektromotor 4 muß in diesem Fall die Drehrichtung ändern, wenn er die Nockenhülse 6 von der entriegelten in die verriegelte Stellung verdreht, was beispielsweise durch eine entsprechende Ansteuerung des Motors durch die Elektronikeinheit 23 erfolgen kann.

Außerdem kann der Schalter 17 auch für zusätzliche Funktionen verwendet werden. So kann z.B. mit diesem Schalter eine Alarmanlage betätigt werden, wenn die Verriegelungsvorrichtung mit großer Gewalt ausgerastet wird.

### Bezugszeichenliste

- 1: Lenkspindel
- 2: Mantelrohr
- 3: Verriegelungsvorrichtung
- 4: Elektromotor
- 5: Ritzel
- 6: Nockenhülse
- 7: Ausnehmung
- 8: Steuernocken
- 9: Nocken
- 10: Sperrsegmenthülse, Hülse
- 11: Druckfeder
- 12: Gehäuse
- 13: Sperrsegment, Sperrelement
- 14: Ausnehmung
- 15: stegförmige Teile
- 16: Ring
- 17: Schalter
- 18: Schaltnocken
- 19: Elektromagnet
- 20: Sperrhebel
- 21: nutenförmige Ausnehmung
- 22: Schalter
- 23: Elektronikeinheit
- 100: Lenkspindelachse

## Patentansprüche

1. Verriegelungsvorrichtung in einem Kraftfahrzeug, bei der zur Verriegelung mindestens ein elektrisch geregeltes Sperrelement (13) in eine entsprechende am äußeren Umfang der Lenkspindel (1) der Lenksäule des Kraftfahrzeuges angeordnete Ausnehmung (14) eingreift, **dadurch gekennzeichnet**, daß an dem äußeren Umfang der Lenkspindel (1) eine Vielzahl benachbarter jeweils durch stegartige Teile (15) beabstandeter Ausnehmungen (14) angeordnet sind, daß es sich bei dem Sperrelement (13) um mindestens ein federndes Sperrsegment handelt, welches in der Verriegelungsstellung kraftschlüssig gegen die Wände der jeweiligen Ausnehmung (14) drückt und an einer in Richtung der Lenkspindelachse (100) gegen den Druck einer Feder (11) verschiebbaren die Lenkspindel (1) umschließenden Hülse (Sperrsegmenthülse) (10) befestigt ist, und daß zur Verschiebung der Sperrsegmente (13) von der Verriegelungsstellung in die Entriegelungsstellung die Sperrsegmenthülse (10) mit einem Elektromotor (4) gekoppelt ist.

2. Verriegelungsvorrichtung nach Anspruch 1, **dadurch gekennzeichnet**, daß mindestens zwei einander gegenüberliegende Sperrsegmente (13) an der Sperrsegmenthülse (10) befestigt sind.

3. Verriegelungsvorrichtung nach Anspruch 1 oder 2, **dadurch gekennzeichnet**, daß die Sperrsegmenthülse (10) über einen Steuernocken (8) mit einer Nockenhülse (6) und diese mit dem Elektromotor (4) verbunden ist, so daß eine Drehung des Elektromotors (4) und damit der Nockenhülse (6) um einen vorgebbaren Winkel eine Verschiebung der Sperrsegmenthülse (10) um eine entsprechende Wegstrecke bewirkt.

4. Verriegelungsvorrichtung nach einem der Ansprüche 1 bis 3, **dadurch gekennzeichnet**, daß die stegartigen Teile (15) etwa die Form des Zahnes eines Zahnrades aufweisen.

5. Verriegelungsvorrichtung nach einem der Ansprüche 1 bis 4, **dadurch gekennzeichnet**, daß die Verriegelungsvorrichtung (3) einen Schalter (17) enthält, der durch einen an der Sperrsegmenthülse (10) angeordneten Schaltnocken (18) betätigbar ist.

6. Verriegelungsvorrichtung nach einem der Ansprüche 1 bis 5**, dadurch gekennzeichnet**, daß die Nockenhülse (6) an ihrem Umfang eine in Richtung der Lenkspindelachse (100) ausgebildete nutenförmige Ausnehmung (21) aufweist, in die bei der Entriegelungsstellung der Verriegelungsvorrichtung (3) ein an einem Elektromagneten (19) befestigter Sperrhebel (20) eingreift.

7. Verriegelungsvorrichtung nach Anspruch 6, **dadurch gekennzeichnet**, daß die Verriegelungsvorrichtung (3) zur Überwachung der Stellung des Elektromagneten (19) einen weiteren Schalter (22) enthält.

8. Verriegelungsvorrichtung nach einem der Ansprüche 1 bis 5, **dadurch gekennzeichnet**, daß die Sperrsegmente (13) die Form gebogener Blattfedern aufweisen.

9. Verriegelungsvorrichtung nach einem der Ansprüche 1 bis 5, **dadurch gekennzeichnet**, daß zur Steuerung der elektrischen Komponenten (4,19,17,22) an der Verriegelungsvorrichtung (3) eine Elektronikeinheit (23) angeordnet ist.

## Claims

1. A locking device in a motor vehicle, in which for locking at least one electrically controlled locking element (13) engages in a corresponding recess (14) disposed on the outer periphery of the steering shaft (1) of the steering column of the motor vehicle,
**characterised in that** a plurality of adjacent recesses (14), in each case spaced by web-type parts (15), are disposed on the outer periphery of the steering shaft (1),
**in that** the locking element (13) is at least an resilient locking segment, which in the locking position presses frictionally against the walls of the respective recess (14) and is attached to a sleeve (locking segment sleeve) (10) which surrounds the steering shaft (1) and is displaceable in the direction of the steering shaft axis (100) against the pressure of a spring (11),
**and in that** to displace the locking segments (13) from the locking position into the unlocking position the locking segment sleeve (10) is coupled with an electric motor (4).

2. A locking device according to Claim 1,
**characterised in that** at least two locking segments (13) lying opposite one another are attached to the locking segment sleeve (10).

3. A locking device according Claim 1 or 2,
**characterised in that** the locking segment sleeve (10) is connected via a peripheral cam (8) to a cam sleeve (6) and this is connected to the electric motor (4), so that a rotation of the electric motor (4) and consequently of the cam sleeve (6) by a predetermined angle effects a displacement of the locking segment sleeve (10) by a corresponding distance.

4. A locking device according to one of Claims 1 to 3,
**characterised in that** the web-type parts (15) have roughly the shape of the tooth of a toothed wheel.

5. A locking device according to one of Claims 1 to 4,
**characterised in that** the locking device (3) contains a switch (17) which can be operated by a control cam (18) disposed on the locking segment sleeve (10).

6. A locking device according to one of Claims 1 to 5,
**characterised in that** on its periphery the cam sleeve (6) comprises a groove-shaped recess (21) constructed in the direction of the steering shaft axis (100), into which a locking lever (20) fixed to an electromagnet (19) engages in the unlocking position of the locking device (3).

7. A locking device according to Claim 6,
**characterised in that** the locking device (3) contains a further switch (22) for monitoring the position of the electromagnet (19).

8. A locking device according to one of Claims 1 to 5,
**characterised in that** the locking segments (13) have the shape of bent leaf springs.

9. A locking device according to one of Claims 1 to 5,
**characterised in that** to control the electrical components (4, 19, 17, 22) an electronic unit (23) is disposed on the locking device (3).

## Revendications

1. Dispositif de verrouillage dans un véhicule automobile, dans lequel, pour le verrouillage, au moins un élément de blocage (13) électriquement commandé engrène dans un évidement (14) correspondant disposé à la périphérie extérieure de l'arbre de direction (1) de la colonne de direction du véhicule automobile, caractérisé en ce qu'une pluralité d'évidements (14) voisins séparés chaque fois par des parties en forme de nervures (15) sont disposés à la périphérie extérieure de l'arbre de direction (1), en ce que, concernant l'élément de blocage (13), il s'agit d'au moins un segment de blocage faisant ressort qui, dans la position de verrouillage, appuie fermement contre les parois de l'évidement (14) correspondant et qui est fixé sur un manchon (manchon à segments de blocage) (10) entourant l'arbre de direction (1) et mobile dans le sens de l'axe (100) de l'arbre de direction, contre la pression d'un ressort (11), et en ce que, pour faire passer les segments de blocage (13) de la position de verrouillage à la position de déverrouillage, le manchon à segments de blocage (10) est relié à un moteur électrique (4).

2. Dispositif de verrouillage selon la revendication 1, caractérisé en ce qu'au moins deux segments de blocage (13), situés de manière opposée l'un à l'autre, sont fixés sur le manchon à segments de blocage (10).

3. Dispositif de verrouillage selon la revendication 1 ou 2, caractérisé en ce que le manchon à segments de blocage (10) est relié, par l'intermédiaire d'une came de commande (8), à un manchon à came (6) qui, quant à lui, est relié au moteur électrique (4), de telle manière qu'une rotation du moteur électrique (4) et, par conséquent, du manchon à came (6), selon un angle qui peut être prédéterminé, provoque un déplacement du manchon à segments de blocage (10) sur une distance correspondante.

4. Dispositif de verrouillage selon l'une des revendications 1 à 3, caractérisé en ce que les parties en forme de nervures (15) présentent approximativement la forme de la dent d'une roue dentée.

5. Dispositif de verrouillage selon l'une des revendications 1 à 4, caractérisé en ce que le dispositif de verrouillage (3) comprend un commutateur (17), qui peut être actionné par une came de contact (18) située sur le manchon à segments de blocage (10).

6. Dispositif de verrouillage selon l'une des revendications 1 à 5, caractérisé en ce que le manchon à came (6) présente, sur sa périphérie, un évidement en forme de rainure (21) dans le sens de l'axe (100) de l'arbre de direction, un levier de blocage (20), fixé à un électroaimant (19) engrenant dans cet évidement, dans la position de déverrouillage du dispositif de verrouillage (3).

7. Dispositif de verrouillage selon la revendication 6, caractérisé en ce que le dispositif de verrouillage (3) comporte un commutateur (22) supplémentaire pour le contrôle de la position de l'électroaimant (19).

8. Dispositif de verrouillage selon l'une des revendications 1 à 5, caractérisé en ce que les segments de blocage (13) se présentent sous la forme de ressorts à lame recourbée.

9. Dispositif de verrouillage selon l'une des revendications 1 à 5, caractérisé en ce qu'il est prévu, sur le dispositif de verrouillage (3), une unité électronique (23) pour la commande des éléments électriques (4, 19, 17, 22).
